# EUROPÄISCHE PATENTSCHRIFT

(11) **EP 0 721 688 B1**
(45) Veröffentlichungstag und Bekanntmachung des Hinweises auf die Patenterteilung: **02.04.1997**
(21) Anmeldenummer: 94928275.0
(22) Anmeldetag: 20.09.1994
(51) Int. Cl.: H02H 7/26, H02H 1/00

(54) **VERFAHREN ZUM ERZEUGEN EINES ANREGESIGNALS**
METHOD OF GENERATING A PROTECTION-TRIGGERING SIGNAL
PROCEDE PERMETTANT DE PRODUIRE UN SIGNAL DE DECLENCHEMENT

(30) Priorität: 27.09.1993 DE 4333260
(43) Veröffentlichungstag der Anmeldung: 17.07.1996
(73) Patentinhaber: SIEMENS AKTIENGESELLSCHAFT, 80333 München (DE)
(72) Erfinder: DALSTEIN, Thomas, D-12099 Berlin (DE)
(86) Internationale Anmeldenummer: DE9401149
(87) Internationale Veröffentlichungsnummer: WO9509469

(56) Entgegenhaltungen:
- ELEKTRIE, Bd. 47, Nr. 1, Januar 1993, Berlin DE, Seiten 2-10, XP000335613; K. BÖHME et al.: 'Optimierung von Distanzschutzalgorithmen mit Hilfe neuronaler Netze'
- IEEE TRANSACTIONS ON POWER DELIVERY, Bd. 7, Nr. 4, Oktober 1992, New York US, Seiten 1871-1877, XP000298198; A.F. SULTAN et al.: 'Detection of high impedance arcing faults using a multi-layer perceptron'

## Beschreibung

Es ist bekannt, zur Erfassung von Störungen in elektrischen Energieversorgungsnetzen Selektivschutz-Anordnungen einzusetzen, um gezielt die von der Störung betroffenen Komponenten oder Netzteile eines elektrischen Energieversorgungsnetzes abschalten zu können. Derartige Selektivschutz-Anordnungen nehmen in der Regel ihre Tätigkeit erst dann auf, nachdem mittels Anregeeinrichtungen Anregesignale erzeugt worden sind. So läßt sich beispielsweise dem Buch von L. Müller/E. Boog "Selektivschutz elektrischer Anlagen" 2. Ausgabe 1990, Seite 122 bis 124, sowie dem Buch von H. Ungrad, W. Winkler, und A. Wiszniewski "Schutztechnik in Elektroenergiesystemen, 1991,Seiten 114 und 116 entnehmen, daß auf Überströme ansprechende Anregeeinrichtungen in den Phasenleitern Überstromrelais aufweisen, die in klassischer Bauart tatsächlich auch Relais als Komponenten aufweisen, in moderner Technik jedoch rein elektronische Anordnungen darstellen. Mit den bekannten Überstromrelais wird überprüft, ob der Scheitelwert des Stromes oder der Effektivwert oberhalb eines vorgegebenen zulässigen Stromwertes liegt. Ist dies der Fall, dann wird ein Anregesignal ausgegeben.

Die Erfindung geht von einem Verfahren zum Erzeugen eines Anregesignals mittels einer Anregeeinrichtung einer Selektivschutz-Anordnung für ein zu überwachendes elektrisches Energieversorgungsnetz aus, bei dem das Anregesignal bei oberhalb zugelassener Werte liegender Werte (Überströme) der Ströme in den Phasenleitern des Energieversorgungsnetzes erzeugt wird.
Der Erfindung liegt die Aufgabe zugrunde, ein solches Verfahren derart fortzuentwickeln, daß mit ihm in vergleichsweise kurzer Zeit ein Anregesignal beim Auftreten eines Überstromes erzeugt werden kann.

Zur Lösung dieser Aufgabe wird erfindungsgemäß eine Anrege-einrichtung verwendet, in der jedem Phasenleiter des zu überwachenden Energieversorgungsnetzes ein neuronales Netz mit jeweils einer Eingangs-, einer Zwischen- und einer Ausgangs-schicht zugeordnet ist, die ein Ausgangsneuron aufweist, wobei jedes neuronale Netz ein durch Simulation der Ströme bei verschiedenen Lastzuständen des zu überwachenden Energieversorgungsnetzes überwacht angelerntes Verhalten aufweist; an die verschiedenen Neuronen der Eingangsschicht jedes neuronalen Netzes werden aufeinanderfolgend abgetastete, normierte Werte des Stromes in dem jeweils zugeordneten Phasenleiter des Energieversorgungsnetzes gleichzeitig angelegt zur Bildung eines dem voraussehbaren Verlauf des Stromes entsprechenden Ausgangssignals des Ausgangsneurons, und ein nachfolgend abgetasteter, normierter Wert des Stromes in dem jeweils zugeordneten Phasenleiter wird mit dem Ausgangssignal des Ausgangsneurons und damit mit dem voraussehbaren Verlauf des Stromes verglichen; das Anregesignal wird erzeugt, wenn der normierte Vergleichswert des Stromes im jeweils zugeordneten Phasenleiter das Ausgangssignal des Ausgangsneurons des entsprechenden neuronalen Netzes übersteigt.

Der wesentliche Vorteil des erfindungsgemäßen Verfahrens besteht darin, daß mit ihm relative kurze Zeit nach dem Auftreten eines Überstromes ein Anregesignal erzeugt wird. Dies ist darauf zurückzuführen, daß bei der Durchführung des erfindungsgemäßen Verfahrens der zeitliche Verlauf des jeweiligen Stromes nicht so lange beobachtet werden muß, bis der Strom in dem jeweiligen Phasenleiter einen einen Überstrom kennzeichnenden Wert überschritten hat; vielmehr ist aufgrund der Verwendung angelernter neuronaler Netze die Möglichkeit gegeben, aufgrund des durch das neuronale Netz voraussehbaren Verlaufs der abgetasteten Stromwerte bereits einen Überstrom dann zu erkennen, wenn z.B. kurz nach einem Nulldurchgang des Stromes der Stromverlauf einen für einen Überstrom charakteristischen Verlauf hat. Es ist somit ohne weiteres möglich, bereits bei einem signifikanten Abweichen eines einzigen abgetasteten Stromwertes von einem einen normalen Laststrom kennzeichnenden Stromwert einen Überstrom zu erkennen und ein Anregesignal zu erzeugen. Selbstverständlich beinhaltet das erfindungsgemäße Verfahren auch die Möglichkeit, aus Sicherheitsgründen mehrere Abtastschritte abzuwarten und erst dann ein Anregesignal auszugeben, wenn durch die Auswertung von durch weitere Abtastungen erfaßter Stromwerte die Entscheidung, daß ein Überstromfall gegeben ist, untermauert wird.

Es ist zwar aus "IEEE Transactions on Power Delivery", Vol. 7, No. 4, Oktober 1992, Seiten 1871 bis 1876 bekannt, ein angelerntes Drei-Schichten-Perzeptron eingangsseitig mit Stromabtastwerten über mehrere Sekunden zu beaufschlagen, um ein einen Hochimpedanz-Fehler kennzeichnendes Ausgangssignal zu erhalten, jedoch geht es hier darum, ein zuverlässiges Personen-Schutzsystem zu schaffen, wobei auch trockene oder feuchte Erde berücksichtigt wird. Das Ausgangssignal nimmt nur die Werte "0" oder "1" an. Ein Vergleich des Ausgangs-signals mit einem zusätzlichen Stromabtastwert als Vergleichswert wird nicht vorgenommen.

Einem Aufsatz von K. Böhme und B. Kulicke "optimierung von Distanzschutzalgorithmen mit Hilfe neuronaler Netze" in der Zeitschrift "Elektrie" 47 (1993) 1, Seiten 2 bis 10, läßt sich ferner entnehmen, daß sich eine Distanzschutz-Anordnung mittels eines geeignet angelernten neuronalen Netzes verwirklichen läßt. Die Lerndaten werden dabei auf dem Wege der Simulation erstellt, indem Energieversorgungsleitungen verschiedener Länge und verschiedene Fehlerfälle simuliert werden. Einen Hinweis auf eine Anregeeinrichtung aus einem neuronalen Netz für eine Selektivschutz-Anordnung sowie auf die Bildung eines Anregesignals mittels eines Vergleichs des Ausgangssignals des Ausgangsneurons des neuronalen Netzes mit einem Abtastwert einer aus dem zu überwachenden Energieversorgungsnetz gewonnenen Meßgröße enthält dieser Aufsatz nicht.

Dem oben aufgeführten Buch von Müller/Boog ist auf den Seiten 124 bis 127 und dem Buch von H. Ungrad u.a. ist auf den Seiten 116 bis 121 ferner zu entnehmen, daß eine Anregung von Selektivschutz-Anordnungen nicht nur durch Erfassung von Überströmen, sondern auch durch Ermittlung von Unterimpedanzen vorgenommen werden. Eine derartige Anregung wird insbesondere dort gewählt, wo der kleinste mögliche Kurzschlußstrom kleiner als der höchste mögliche Betriebsstrom ist.

Um auch im Rahmen einer Unterimpedanzanregung ein Anregesignal möglichst schnell zu gewinnen, wird bei einer vorteilhaften Ausgestaltung des erfindungsgemäßen Verfahrens eine erweiterte Anregeeinrichtung verwendet, in der jedem Phasenleiter des zu überwachenden Energieversorgungsnetzes ein weiteres neuronales Netz mit jeweils einer Eingangs-, einer Zwischen- und einer Ausgangsschicht zugeordnet ist, die ein Ausgangsneuron aufweist, wobei jedes weitere neuronale Netz ein durch Simulation der Spannungen bei verschiedenen Lastzuständen des zu überwachenden Energieversorgungsnetzes überwacht angelerntes Verhalten aufweist; an die verschiedenen Neuronen der Eingangsschicht jedes weiteren neuronalen Netzes werden aufeinanderfolgend abgetastete, normierte Werte der Spannung an dem jeweils zugeordneten Phasenleiter des Energieversorgungsnetzes gleichzeitig angelegt und ein nachfolgend abgetasteter normierter Wert der Spannung an dem jeweils zugeordneten Phasenleiter wird mit dem dem voraussehbaren Verlauf der Spannung entsprechenden Ausgangs-signal des Ausgangsneurons des jeweiligen weiteren neuronalen Netzes verglichen; das Anregesignal wird erzeugt, wenn der normierte Vergleichswert des Stromes im jeweils zugeordneten Phasenleiter das Ausgangssignal des Ausgangsneurons des entsprechenden neuronalen Netzes übersteigt und/oder zusätzlich der normierte Vergleichswert der Spannung an jeweils demselben Phasenleiter das Ausgangssignal des Ausgangsneurons des entsprechenden weiteren neuronalen Netzes unterschreitet.

Auch diese Ausführungsform des erfindungsgemäßen Verfahrens zeichnet sich dadurch aus, daß mit ihm in relativ kurzer Zeit nach dem Auftreten einer Unterimpedanz das entsprechende Anregesignal erzeugt wird, weil durch die Verwendung entsprechend angelernter weiterer neuronaler Netze auch die Spannungsverläufe im Kurzschlußfall entsprechend vorausbestimmbar sind, so daß bereits nach Bruchteilen einer Periode der Netzspannung ein Anregesignal zur Verfügung gestellt wird.

Vorteilhaft ist es ferner, wenn nach der Erzeugung des Anregesignals das dabei berücksichtigte Ausgangssignal des Ausgangsneurons des jeweiligen neuronalen Netzes als nächster abgetasteter Wert gleichzeitig mit vorhandenen abgetasteten normierten Werten des Stromes auf dasselbe neuronale Netz zugeschaltet wird.

Es wird ferner im Hinblick auf eine vorgegebene Zuverlässigkeit des erfindungsgemäßen Verfahrens bei relativ einfachem Aufbau der neuronalen Netze als vorteilhaft angesehen, wenn neuronale Netze mit einer Eingangsschicht mit fünf Neuronen und mit einer Zwischenschicht mit fünf Neuronen verwendet werden.

Das erfindungsgemäße Verfahren erlaubt es in vorteilhafter Weise ferner, für die zugeordnete Selektivschutz-Anordnung Referenzströme bzw. Referenzspannungen zur Verfügung zu stellen, wenn das Ausgangssignal des Ausgangsneurons als Referenzsignal für die Selektivschutz-Anordnung verwendet wird. Insbesondere wenn als Selektivschutz-Anordnung ein Richtungsrelais eingesetzt wird, ist diese Ausführungsform des erfindungsgemäßen Verfahrens von besonderem Vorteil.

Zur Erläuterung des erfindungsgemaßen Verfahrens ist in
- Figur 1: ein Ausführungsbeispiel einer Anordnung mit einem neuronalen Netz zur Erzeugung eines Anregesignals aufgrund eines Überstromes in einem Phasenleiter und in
- Figur 2: ein Blockschaltbild einer Anordnung dargestellt, mit der mittels neuronaler Netze ein Anregesignal durch Unterimpedanzanregung erzeugt werden kann.

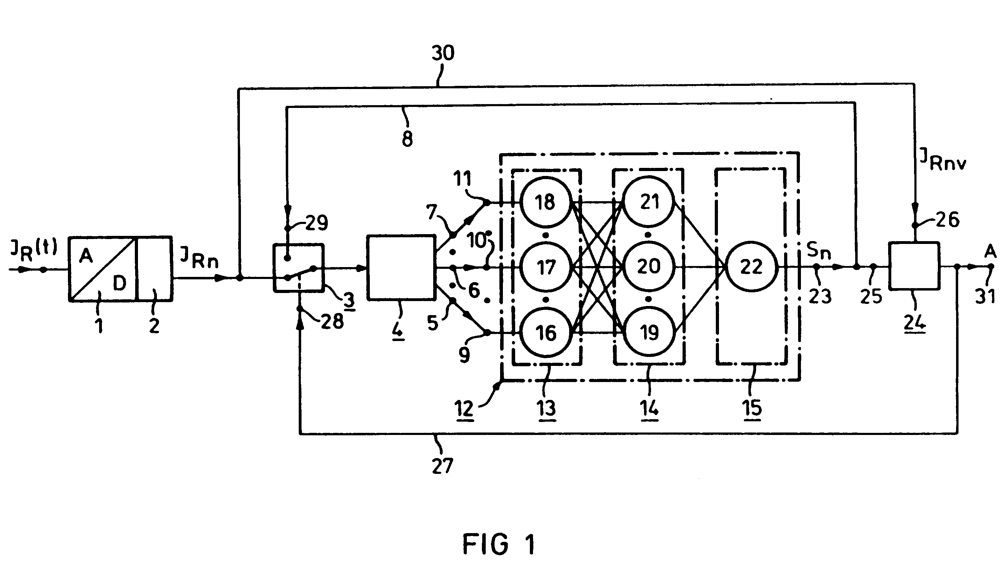

Der in Figur 1 dargestellten Anordnung ist eingangsseitig ein Strom J_{R}(t) zugeführt, der dem Strom in dem Phasenleiter R eines nicht dargestellten, zu überwachenden Energieversorgungsnetzes proportional ist. Der Strom J_{R}(t) wird in einem Analog-Digital-Wandler 1 abgetastet; die abgetasteten Stromwerte werden in digitale Werte umgewandelt. In einem nachgeordneten Normierungs-Baustein 2 werden die abgetasteten Stromwerte in normierte Werte J_{Rn} des Stromes umgesetzt. Die abgetasteten normierten Werte J_{Rn} werden über einen elektronischen Umschalter 3 einem diesem nachgeordneten Multiplexer 4 zugeführt, der fünf Ausgänge aufweist, von denen die Ausgänge 5, 6 und 7 gezeigt sind. Dabei ist der Multiplexer 4 mit derartigen Verzögerungsgliedern ausgestattet, daß an seinen Ausgängen 5 bis 7 die abgetasteten Werte J_{Rn} des Stromes gleichzeitig auftreten, wobei das gleichzeitige Auftreten der unterschiedlich verzögerten Werte an den Ausgängen 5 bis 7 gleichzeitig mit der Abgabe eines weiteren abgetasteten Wertes J_{Rn} vom Normierungs-Baustein 2 über eine Leitung 30 erfolgt.

Mit den Ausgängen 5 bis 7 des Multiplexers 4 sind fünf Eingänge 9, 10 und 11 (nur drei Eingänge sind gezeigt) eines neuronalen Netzes 12 verbunden, das aus einer Eingangsschicht 13, einer Zwischenschicht 14 und einer Ausgangsschicht 15 besteht. Das neuronale Netz 12 weist in seiner Eingangsschicht 13 fünf Neuronen auf, von denen drei Neuronen 16, 17 und 18 dargestellt sind; die Zwischenschicht 14 enthält ebenfalls fünf Neuronen, von denen drei Neuronen 19, 20 und 21 gezeigt sind, während die Ausgangsschicht 15 nur mit einem einzigen Neuron (Ausgangsneuron 22) versehen ist. Das neuronale Netz 12 ist im vorliegenden Falle nach dem Backpropagation-Algorithmus von Rumelhart angelernt, wobei die Ströme J_{R}(t) bei den verschiedenen Last- und Fehlerzuständen durch Simulation mit einem dem zu überwachenden Energieversorgungsnetz entsprechenden Netzmodell erzeugt werden. Im vorliegenden Fall wurde das Netzmodell NETOMAC benutzt, das in "Elektrizitätswirtschaft", 1979, Heft 1, Seiten 18 bis 23, im einzelnen beschrieben ist.

Einem Ausgang 23 der Ausgangsschicht 15 bzw. des neuronalen Netzes 12 ist ein Vergleicher 24 nachgeordnet, der an seinem einen Eingang 25 mit dem Ausgangssignal des Ausgangsneurons 22 beaufschlagt ist. An einen weiteren Eingang 26 des Vergleichers 24 ist über die Leitung 30 der Ausgang des Normierungs-Bausteins 2 unmittelbar angeschlossen, so daß dem Vergleicher 24 über den Eingang 26 ein abgetasteter, normierter Wert J_{Rnv} als Vergleichswert des Stromes J_{R}(t) zugeführt wird, der zeitlich auf den letzten dem Multiplexer 4 zugeführten abgetasteten, normierten Wert folgt.

Wie Figur 1 ferner erkennen läßt, ist der Ausgang des Vergleichers 24 über eine Steuerleitung 27 auch mit einem Steuereingang 28 des elektronischen Schalters 3 verbunden; der Signaleingang 29 des Schalters 3 ist mit dem Ausgangsneuron 22 über eine Signalleitung 8 verbunden.

Die in Figur 1 dargestellte Anordnung arbeitet in der Weise, daß der Strom J_{R}(t) im Analog-Digital-Umsetzer 1 abgetastet und die abgetasteten Werte in digitale Werte umgesetzt werden. Diese werden in dem nachgeordneten Normierungs-Baustein 2 normiert und als abgetastete, normierte Werte J_{Rn} über den freigegebenen Schalter 3 auf den Multiplexer 4 übertragen. Dieser Multiplexer 4 gibt die nacheinander abgetasteten, normierten Werte J_{Rn} des Stromes J_{R}(t) aufgrund der internen Verzögerungsglieder über seine Ausgänge 5 bis 7 und die Eingänge 9 bis 11 gleichzeitig auf das neuronale Netz 12, das daraufhin an seinem Ausgang 23 ein entsprechendes normiertes Ausgangssignal Sₙ erzeugt. Der nach den fünf abgetasteten, normierten Werten des Stromes J_{R}(t) erzeugte weitere abgetastete normierte Wert des Stromes wird ebenfalls gleichzeitig als der Vergleichswert J_{Rnv} über den Ausgang des Normierungs-Bausteins 2 und die Leitung 8 auf den Vergleicher 24 gegeben, in dem der Vergleichswert J_{Rnv} mit dem Ausgangssignal Sₙ des neuronalen Netzes 12 verglichen wird. Übersteigt der normierte Vergleichswert J_{Rnv} das Ausgangssignal Sₙ des neuronalen Netzes 12, dann wird am Ausgang 31 des Vergleichers 24 ein Anregesignal A erzeugt.

Häufig wird nicht nur der Strom in einem Phasenleiter überwacht, sondern es werden auch die Ströme in den weiteren Phasenleitern des zu überwachenden Energieversorgungsnetzes kontrolliert. Dazu dient jeweils eine Anordnung, die der nach Figur 1 entspricht, so daß ggf. an den Ausgängen dieser weiteren Anordnungen entsprechende Anregesignale gebildet werden. Diese Anregesignale können zur Erzeugung einer General-Anregung mittels OR-Gliedern ausgewertet werden. Das Ausgangssignal der General-Anregung stellt dann ein AnregeSignal für die zugeordnete Selektiv-Schutzanordnung dar, bei der es sich beispielsweise um eine Distanzschutz-Anordnung handeln kann.

Ist ein Anregesignal A am Ausgang 31 erzeugt, dann wird über die Steuerleitung 27 der elektronische Schalter 3 umgeschaltet und dadurch der Ausgang 23 bzw. das Ausgangssignal Sₙ des Ausgangsneurons 22 auf den Eingang des Multiplexers 4 geschaltet. Dieser schaltet das Signal Sₙ und noch zwei der drei früher bereits abgetasteten Werte auf das neuronale Netz 12. Der Vorgang wiederholt sich noch zweimal, bis schließlich nur noch (nacheinander erzeugte) Ausgangssignale Sₙ vom Multiplexer 4 verarbeitet und weiter gegeben werden. Beispielsweise für eine Richtungsbestimmung des Fehlers im Energieversorgungsnetz ist dies von Interesse.

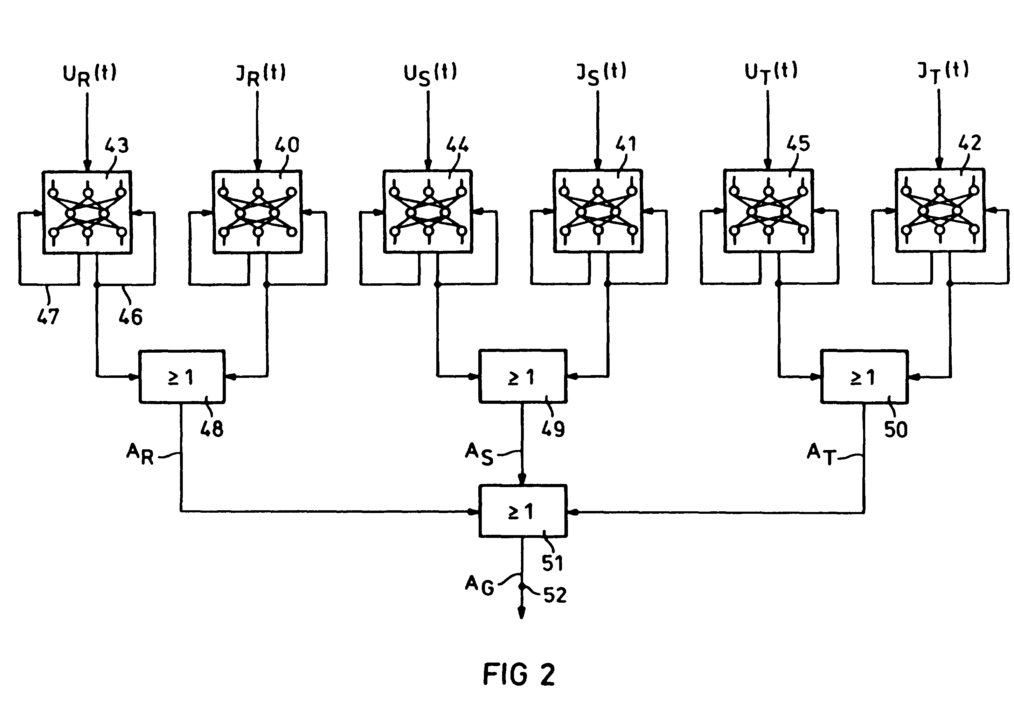

In Figur 2 ist eine Anrege-Einrichtung dargestellt, bei der nicht nur Ströme J_{R}(t), J_{S}(t) und J_{T}(t) mittels Anordnungen 40, 41 und 42 gemäß Figur 1 überwacht werden, sondern auch die Phasenspannungen U_{R}(t), U_{S}(t) und U_{T}(t) mittels weiterer Anordnungen 43, 44 und 45. Jede der Anordnungen 43 bis 45 ist dabei entsprechend der Anordnung nach Figur 1 ausgebildet, mit dem Unterschied, daß sie mit der entsprechenden Phasenspannung beaufschlagt sind und jeweils ein weiteres neuronales Netz aufweisen, das jeweils entsprechend den Spannungsverhaltnissen bei verschiedenen Last zuständen in ähnlicher Weise überwacht angelernt worden ist wie das neuronale Netz 12 gemäß Figur 1.

Wie die Anordnungen 40, 41 und 42, so sind auch die Anordnungen 43 bis 45 mit jeweils einer Steuerleitung 46 und einer Signalleitung 47 entsprechend den Leitungen 29 und 30 gemäß Figur 1 versehen.

Den einander zugeordneten Anordnungen 40 und 43 bzw. 41 und 44 sowie 42 und 45 für jede Phase des zu überwachenden Energieversorgungsnetzes ist jeweils ein OR-Glied 48, 49 und 50 nachgeschaltet, in denen im Falle einer Unterimpedanzanregung jeweils ein Anregesignal A_{R}, A_{S} und/oder A_{T} dann erzeugt wird, wenn z.B. die Spannung U_{R}(t) einen vorgegebenen Wert unterschreitet und/oder der Strom J_{R}(t) einen höchsten zugelassenen Strom überschreitet. Alle OR-Glieder 48 bis 50 sind auf ein nachgeordnetes OR-Glied 51 geschaltet, das an seinem Ausgang 52 eine General-Anregung AG erzeugt.

## Patentansprüche

1. Verfahren zum Erzeugen eines Anregesignals (A) mittels einer Anregeeinrichtung einer Selektivschutz-Anordnung für ein zu überwachendes elektrisches Energieversorgungsnetz, bei dem das Anregesignal (A) bei oberhalb zugelassener Werte liegender Werte der Ströme in den Phasenleitern des Energieversorgungsnetzes erzeugt wird,
**dadurch gekennzeichnet,** daß
- eine Anregeeinrichtung verwendet wird, in der jedem Phasenleiter des zu überwachenden Energieversorgungsnetzes ein neuronales Netz (12) mit jeweils einer Eingangs- (13), einer Zwischen-(14) und einer Ausgangsschicht (15) zugeordnet ist, die ein Ausgangsneuron (22) aufweist,
- wobei jedes neuronale Netz (12) ein durch Simulation der Ströme (J_{R}(t)) bei verschiedenen Lastzustanden des zu überwachenden Energieversorgungsnetzes überwacht angelerntes Verhalten aufweist,
- an die verschiedenen Neuronen (16,17,18) der Eingangsschicht (13) jedes neuronalen Netzes (12) aufeinanderfolgend abgetastete, normierte Werte (J_{Rn}) des Stromes (J_{R}(t)) in dem jeweils zugeordneten Phasenleiter des Energieversorgungsnetzes gleichzeitig angelegt werden zur Bildung eines dem voraussehbaren Verlauf des Stromes (J_{R}(t)) entsprechenden Ausgangssignals (Sₙ) des Ausgangsneurons (22) und
ein nachfolgend abgetasteter, normierter Wert (J_{Rnv}) des Stromes (J_{R}(t)) in dem jeweils zugeordneten Phasenleiter mit dem Ausgangssignal (Sₙ) des Ausgangsneurons (22) und damit mit dem voraussehbaren Verlauf des Stromes (J_{R}(t)) verglichen wird und
- das Anregesignal (A) erzeugt wird, wenn der normierte Vergleichswert (J_{Rnv}) des Stromes (J_{R}(t)) im jeweils zugeordneten Phasenleiter das Ausgangssignal (Sₙ) des Ausgangsneurons (22) des entsprechenden neuronalen Netzes (12) übersteigt.

2. Verfahren nach Anspruch 1,
**dadurch gekennzeichnet**, daß
- eine erweiterte Anregeeinrichtung verwendet wird, in der jedem Phasenleiter des zu überwachenden Energieversorgungsnetzes ein weiteres neuronales Netz (43,44,45) mit jeweils einer Eingangs-, einer Zwischen- und einer Ausgangsschicht zugeordnet ist, die ein Ausgangsneuron aufweist,
- wobei jedes weitere neuronale Netz (43,44,45) ein durch Simulation der Spannungen bei verschiedenen Last zuständen des zu überwachenden Energieversorgungsnetzes überwacht angelerntes Verhalten aufweist,
- an die verschiedenen Neuronen der Eingangsschicht jedes weiteren neuronalen Netzes (43,44,45) aufeinanderfolgend abgetastete, normierte Werte der Spannung an dem jeweils zugeordneten Phasenleiter des Energieversorgungsnetzes gleichzeitig angelegt werden und
ein nachfolgend abgetasteter normierter Wert der Spannung an dem jeweils zugeordneten Phasenleiter mit dem dem voraussehbaren Verlauf der Spannung entsprechenden Ausgangssignal des Ausgangsneurons des jeweiligen weiteren neuronalen Netzes (43,44,45) verglichen wird und
- das Anregesignal (A_{R}, Aₛ, Aᵣ) erzeugt wird, wenn der normierte Vergleichswert des Stromes im jeweils zugeordneten Phasenleiter das Ausgangssignal des Ausgangsneurons des entsprechenden neuronalen Netzes übersteigt und/oder zusätzlich der normierte Vergleichswert der Spannung an jeweils demselben Phasenleiter das Ausgangssignal des Ausgangsneurons des entsprechenden weiteren neuronalen Netzes (43,44,45) unterschreitet.

## Claims

1. Method for generating a trigger signal (A) by means of a trigger device of a selective-protection arrangement for an electrical power supply network which is to be monitored, wherein the trigger signal (A) is generated when values of the currents in the phase conductors of the power supply network lie above permitted values, characterised in that
- a trigger device is used, in which device associated with each phase conductor of the power supply network which is to be monitored there is a neuronal network (12) which, in each case, has one input layer (13), one intermediate layer (14) and one output layer (15) and which has an output neurone (22),
- with each neuronal network (12) having performance characteristics which are acquired in a monitored manner by means of simulation of the currents (J_{R}(t)) in various load states of the power supply network which is to be monitored,
- there are simultaneously applied to the various neurones (16, 17, 18) of the input layer (13) of each neuronal network (12) successively scanned normalized values (J_{Rn}) of the current (J_{R}(t)) in the respectively associated phase conductor of the power supply network in order to form an output signal (Sₙ) of the output neurone (22) that corresponds to the foreseeable characteristics of the current (J_{R}(t)), and
a subsequently scanned normalized value (J_{Rnv}) of the current (J_{R}(t)) in the respectively associated phase conductor is compared with the output signal (Sₙ) of the output neurone (22) and thus with the foreseeable characteristics of the current (J_{R}(t)), and
- the trigger signal (A) is generated if the normalized comparison value (J_{Rnv)} of the current (J_{R}(t)) in the respectively associated phase conductor exceeds the output signal (Sₙ) of the output neurone (22) of the corresponding neuronal network (12).

2. Method according to claim 1, characterised in that
- an extended trigger device is used, in which device associated with each phase conductor of the power supply network which is to be monitored there is a further neuronal network (43, 44, 45) which, in each case, has one input layer, one intermediate layer and one output layer and which has an output neurone,
- with each further neuronal network (43, 44, 45) having performance characteristics which are acquired in a monitored manner by means of simulation of the voltages in various load states of the power supply network which is to be monitored,
- there are simultaneously applied to the various neurones of the input layer of each further neuronal network (43, 44, 45) successively scanned normalized values of the voltage at the respectively associated phase conductor of the power supply network, and
a subsequently scanned normalized value of the voltage at the respectively associated phase conductor is compared with the output signal of the output neurone of the respective further neuronal network (43, 44, 45), which output signal corresponds to the foreseeable characteristics of the voltage, and
- the trigger signal (A_{R}, Aₛ, Aᵣ) is generated if the normalized comparison value of the current in the respectively associated phase conductor exceeds the output signal of the output neurone of the corresponding neuronal network and/or in addition the normalized comparison value of the voltage at respectively the same phase conductor is less than the output signal of the output neurone of the corresponding further neuronal network (43, 44, 45).

## Revendications

1. Procédé de production d'un signal (A) d'excitation au moyen d'un dispositif d'excitation d'un dispositif de protection sélective pour un réseau d'alimentation en énergie électrique à contrôler, dans lequel on produit le signal (A) d'excitation lorsque des valeurs des courants dans les conducteurs de phase du réseau d'alimentation en énergie sont supérieures à des valeurs admises,
caractérisé en ce que
- on utilise un dispositif d'excitation, dans lequel il est associé à chaque conducteur de phase du réseau d'alimentation en énergie à contrôler un réseau neuronal (12), qui comporte une couche (13) d'entrée, une couche (14) intermédiaire et une couche (15) de sortie ayant un neurone (22) de sortie,
- chaque réseau neuronal (12) ayant un comportement acquis de manière contrôlée par simulation des courants (J_{R}(t)) pour différents états de charge du réseau d'alimentation en énergie à contrôler,
- on applique simultanément aux différents neurones (16, 17, 18) de la couche (13) d'entrée de chaque réseau neuronal (12) des valeurs (J_{Rn}) normées et échantillonnées successivement du courant (J_{R}(t)) dans le conducteur de phase respectivement associé du réseau d'alimentation en énergie, pour former un signal (Sₙ) de sortie du neurone (22) de sortie qui correspond à la courbe prévisible du courant (J_{R}(t)) et
on compare une valeur (J_{Rnv}) normée puis échantillonnée du courant (J_{R}(t)) dans le conducteur de phase respectivement associé au signal (Sₙ) de sortie du neurone (22) de sortie et ainsi à la courbe prévisible du courant (J_{R}(t)) et
- on produit le signal (A) d'excitation, lorsque la valeur (J_{Rnv}) de comparaison normée du courant (J_{R}(t)) dans le conducteur de phase respectivement associé est supérieure au signal (Sₙ) de sortie du neurone (22) de sortie du réseau neuronal correspondant (12).

2. Procédé suivant la revendication 1,
caractérisé en ce que
- on utilise un dispositif d'excitation élargi, dans lequel il est associé à chaque conducteur de phases du réseau d'alimentation en énergie à contrôler un réseau neuronal supplémentaire (43, 44, 45) comportant une couche d'entrée, une couche intermédiaire et une couche de sortie ayant un neurone de sortie,
- chaque réseau neuronal supplémentaire (43, 44, 45) ayant un comportement acquis de manière contrôlée par simulation des tensions pour différents états de charge du réseau d'alimentation en énergie à contrôler,
- on applique simultanément aux différents neurones de la couche d'entrée de chaque réseau neuronal supplémentaire (43, 44, 45) des valeurs normées et échantillonnées successivement de la tension au conducteur de phase respectivement associé du réseau d'alimentation en énergie et
on compare une valeur normée et échantillonnée successivement de la tension au conducteur de phase respectivement associé au signal de sortie du neurone de sortie du réseau neuronal supplémentaire considéré (43, 44, 45), qui correspond à la courbe prévisible de la tension et
- on produit le signal (A_{R}, A_{S}, A_{T}) d'excitation, lorsque la valeur de comparaison normée du courant dans le conducteur de phase respectivement associé est supérieure au signal de sortie du neurone de sortie du réseau neuronal correspondant et/ou en plus lorsque la valeur de comparaison normée de la tension sur ce même conducteur de phase est inférieure au signal de sortie du neurone de sortie du réseau neuronal supplémentaire correspondant (43, 44, 45).
